# EUROPEAN PATENT APPLICATION

(11) **EP 3 002 961 A1**
(43) Date of publication of application: **06.04.2016**
(21) Application number: 15187508.5
(22) Date of filing: 30.09.2015
(51) Int. Cl.: H04S 7/00

(54) **MOUNT FOR MEDIA CONTENT PRESENTATION DEVICE**

(30) Priority: 02.10.2014 US 201414505094
(71) Applicant: Harman International Industries, Incorporated, Stamford, CT 06901 (US)
(72) Inventor: GARG, Aman, Stamford, CT 06901 (US); DI CENSO, Davide, Stamford, CT 06901 (US); CHIDRI, Raghavendra, Stamford, CT 06901 (US)
(74) Representative: Grünecker Patent- und Rechtsanwälte PartG mbB

(57) **Abstract**

A mount for a media content presentation device is disclosed that includes a base member, a support member that is coupled to the base member and is adapted to physically couple to the media content presentation device, and a first computing device disposed within the base member and that includes a detection module that operates to determine a location of an object relative to the mount. The mount further includes an actuating device communicatively coupled to the first computing device and that operates to move the support based on the determined location.

## Description

### BACKGROUND OF THE INVENTION

### Field of the Invention

The embodiments disclosed herein relate to the presentation of media content, and in particular, a movable mount for controlling orientation of a media content presentation device.

### Description of the Related Art

Media devices are often limited in their directionality of media output, and thus are typically configured to provide an optimal (or at the very least, an acceptable) performance within a particular arrangement. For example, visual displays often include a finite, maximum viewing angle for a viewer. Within this maximum viewing angle, the displayed images or video will have a level of display quality that is ostensibly acceptable to the viewer. Similarly, optimal performance is typically achieved in audio systems where speaker drivers are oriented directly at a listener.

### SUMMARY

A mount for a media content presentation device is disclosed that includes a base member, a support member coupled to the base member and that is adapted to physically couple to the media content presentation device, and a first computing device disposed within the base member and that includes a detection module that operates to determine a location of an object relative to the mount. The mount further includes an actuating device communicatively coupled to the first computing device and that operates to move the support based on the determined location.

A system is disclosed that includes one or more mounts, where each mount includes a base member, a support member coupled to the base member and that is adapted to physically couple to a respective media content presentation device, a respective first computing device disposed within the base member and that includes a detection module that operates to determine a location of an object relative to the mount, and a respective actuating device communicatively coupled to the computing device and that operates to move the support based on the determined location. The system further includes a locator device communicatively coupled to at least one first computing device, where the detection module is configured to receive location data from the locator device to determine the location of the object.

A method is disclosed for presenting media content using a presentation device physically coupled to a mount. The method includes determining, using a processor included in the mount, a location of an object relative to the presentation device. The method further includes moving, using an actuating device included in the mount and coupled to the processor, the mount based on the determined location.

Other systems, methods, features and advantages of the disclosure will be, or will become, apparent to one with skill in the art upon examination of the following figures and detailed description. It is intended that all such additional systems, methods, features and advantages be included within this description, be within the scope of the disclosure, and be protected by the following claims.

### BRIEF DESCRIPTION OF THE DRAWINGS

So that the manner in which the above recited features of the present disclosure can be understood in detail, a more particular description of the disclosure, briefly summarized above, may be had by reference to embodiments, some of which are illustrated in the appended drawings. It is to be noted, however, that the appended drawings illustrate only typical embodiments of this disclosure and are therefore not to be considered limiting of its scope, for the invention may admit to other equally effective embodiments.
FIGs. 1A-1F illustrate a mount for a media content presentation device, according to one embodiment.
FIG. 2 is a schematic illustration of a mount for a media content presentation device, according to one embodiment.
FIGs. 3A and 3B illustrate operation of a mount for a media content presentation device, according to one embodiment.
FIG. 4 illustrates operation of a plurality of mounts for corresponding media content presentation devices, according to one embodiment.
FIG. 5 illustrates a method for presenting media content using a presentation device, according to one embodiment.
FIG. 6 illustrates a method for controlling presentation of media content using a presentation device, according to one embodiment.

### DETAILED DESCRIPTION

In the following description, numerous specific details are set forth to provide a more thorough understanding of the present disclosure. However, it will be apparent to one of skill in the art that the present disclosure may be practiced without one or more of these specific details.

Embodiments disclosed herein include a mount for a media content presentation device is disclosed that includes a base member, a support member that is coupled to the base member and is adapted to physically couple to the media content presentation device, and a first computing device disposed within the base member and that includes a detection module that operates to determine a location of an object relative to the mount. The mount further includes an actuating device communicatively coupled to the first computing device and that operates to move the support based on the determined location.

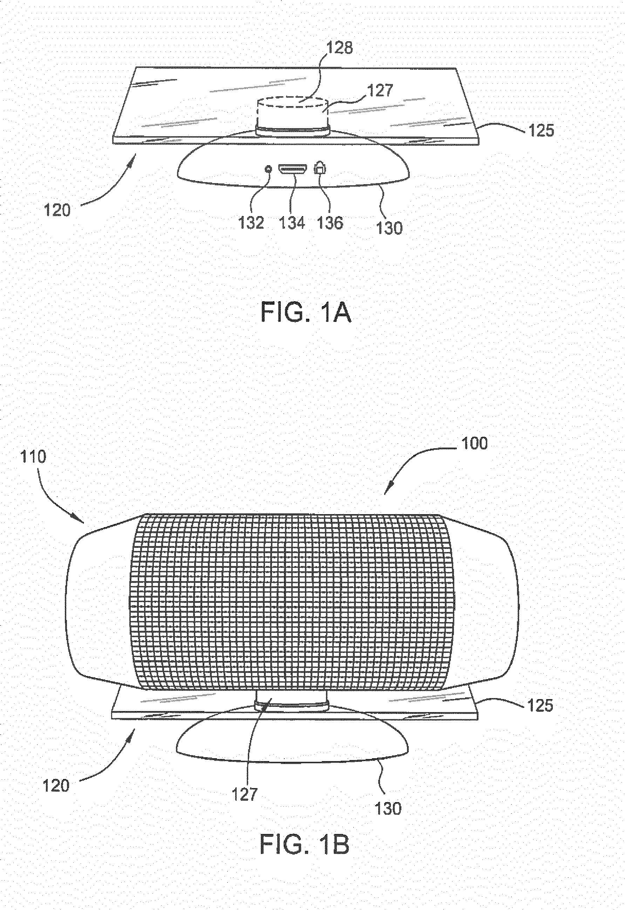

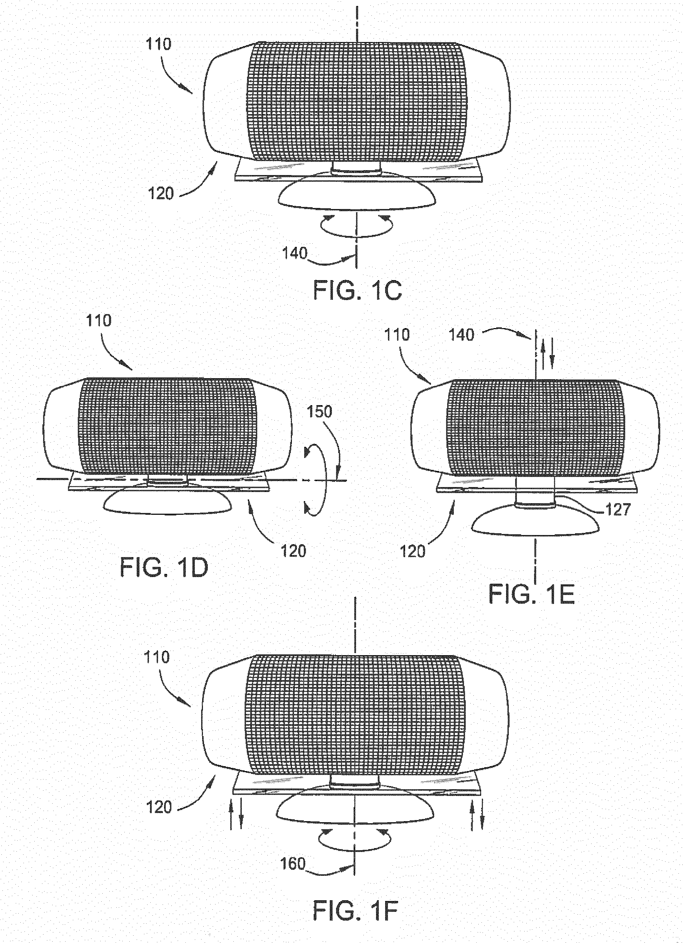

FIG. 1A illustrates a mount for a media content presentation device, according to one embodiment. As shown, mount 120 includes a support member 125 (also support 125), an arm 127, and a base member 130. The base member 130 is physically coupled to the arm 127, which in turn is physically coupled to the support member 125 at a physical interface 128. The physical interface 128 may be fixed or may be selectively pivotable, allowing movement of the support member 125 along one or several degrees of freedom. Movement of the support member is discussed further below with respect to FIGs. 1C-1F.

Within the base member 130, mount 120 includes a computing device (not shown) that may be used to determine the location of an object and to control movement of the support based on the determined location. The computing device may further include an interface for communicating with a media content presentation device, including one or more wireless communication modules (not shown) and/or wired ports. As shown, the base member includes an audio port 132, a video port 134, and a network port 136. Of course, additional ports or alternative arrangements of ports may be provided. The ports may provide media, control functionality, and or network connectivity from the computing device to a coupled media content presentation device. One mount 120 may thus be compatible with a wide variety of media content presentation devices, ranging from traditional speakers and display devices to more sophisticated electronics that natively include networking and/or media storage or streaming capabilities (such as wireless speakers, tablet computers, mobile phones, and so forth).

The base member 130 may include a power module to power the computing device. The power module may include a wired connection to wall power or another power source, and may also include a rechargeable battery or other energy storage device permitting portable operation of the mount 120. Though not shown, the power module of base member 130 may also be used to power (or to charge) the media content presentation devices, whether through wired or wireless coupling techniques known in the art.

FIG. 1B illustrates a mount for a media content presentation device, according to one embodiment. As shown in environment 100, a media content presentation device 110 (also referred to herein as a "presentation device") is physically coupled to mount 120. Environment 100 may generally be any environment suitable for media playback, and may include various types of residential and commercial environments. In one example, the media content presentation device 110 may be used for entertainment purposes in a home or business. In another example, the media content presentation device 110 may be used for promotional purposes in a retail store or workplace.

Media content presentation device 110 may include any type of device suitable for presenting information through media content, whether known or hereinafter developed. The media content presentation device may present traditional media, such as printed media, and/or one or more types of electronic media. Electronic media may include content that, when output by the media content presentation device 110, is readily perceptible by an audience. For example, the electronic media may include audio and/or video content for individual users of the media content presentation device. Electronic media may also be in the form of data to be communicated between the media content presentation device and secondary electronic devices. In some cases, the secondary electronic devices may use the received data to present perceptible content to the audience.

Media content presentation device 110 may include devices that are purely passive, such as a printed media display or a conventional audio speaker, as well as active presentation devices. As discussed herein, active devices include powered circuitry capable of performing various functions related to communicating, processing, and/or presenting media content. Active devices may include a processor or other circuitry that provides analog and/or digital signal processing functionality, such as amplification or modulation. Some non-limiting examples of active devices include powered audio speakers, radios, mobile phones, digital displays, touchscreens, televisions, gaming devices, computing devices, and so forth.

Mount 120 is provided to physically couple to the media content presentation device 110, and to manipulate the orientation of the media content presentation device based on determined locations of one or more objects or persons. The mount 120 may move the media content presentation device along various axes, such as pan and/or tilt. The mount 120 may additionally physically support the media content presentation device 110, based on the relative positions of the mount and media content presentation device and any attachment.

Mount 120 may have a unitary construction or may be formed with multiple components for performing the functions described herein. As shown, mount 120 includes a support 125, arm 127, and base member 130, but alternate configurations are possible. Mount 120 may be a universal-type device that is capable of accommodating a plurality of different presentation devices (and types of devices), or mount 120 may be designed to selectively couple with a size and/or form factor of one or more specific presentation devices. In an alternative embodiment, mount 120 may be integrated with a particular media content presentation device 110.

Support 125 provides an interface at which the mount 120 physically couples to the media content presentation device 110. The support may have any feasible shape and size, and may be constructed from any suitable materials, which may be selected to accommodate a size and/or form factor of the presentation device(s) to be used with the mount. In a universal-type mount, the support may have a rigid construction and include a flat surface, which may mimic the surface upon which the presentation device may ordinarily be used (*e.g.,* a table, desk, or floor). In one embodiment, the support 125 may be a platform disposed beneath the media content presentation device 110. In an alternative embodiment, support 125 may be constructed using a deformable material that conforms to contours of an emplaced presentation device. In a presentation device-specific implementation of mount 120, support 125 may have a size and/or form factor selected to complement those of the presentation device. For example, if the presentation device is substantially cylindrical, the surface of the support 125 may include an inner curve having a slightly larger diameter than that of the cylindrical device. When coupled, the presentation device may generally be more stably positioned on the support 125 and mount 120. Of course, other possible shapes and configurations will be apparent to the person of ordinary skill in the art.

In some embodiments, support 125 may couple to the media content presentation device 110 using the natural forces occurring at the interface, such as gravity and/or frictional force between interfacing surfaces. Of course, the interfacing surfaces of the support and/or presentation device may be selected to provide increased frictional force (*e.g*., increased interface surface area, adding texture to one or more of the surfaces, selecting a rubber or similar material, and so forth).

In other embodiments, the presentation device may be affixed, fastened, or otherwise removably attached to the support 125. Attachment in this manner may be preferable for moving the media content presentation device to and from certain orientations; for example, support 125 may be tilted to a greater degree when the presentation device is secured to the support than when the presentation device is coupled and retained using merely gravity and/or frictional forces. In some embodiments, attachment between the presentation device and support 125 may be used in cases where the mount 120 also requires attachment to a surface; for example, mount 120 may be bolted into a wall, ceiling, or other surface.

Support 125 may couple to the presentation device using one or more discrete securing devices. The securing devices may include fasteners, such as bolts designed to engage with tapped holes in the media content presentation device. In this case, the support 125 may be a relatively thin plate having openings through which the tapped holes are exposed. The tapped holes may be arranged in a standardized pattern; for example, the media content presentation device may be a video display having a Video Electronics Standards Association (VESA)-compliant pattern. In some embodiments, the securing devices may include straps or webbing that may be tensioned to secure the presentation device to the support.

As shown, mount 120 also includes an arm 127 and base member 130. The arm 127 projects from the base member 130 and couples the support 125 to the base. While shown here as separate components, in alternate embodiments the base member and the arm may be a single component, or the arm and the support may be a single component. Arm 127 may be articulated or non-articulated, and may be moved along one or more degrees of freedom using an actuating device (not shown). For example, arm 127 may be extended, retracted, rotated, pivoted, and so forth. The support 125 may also be pivotably attached to the arm 127, and the movement of support 125 may be controlled using servomotors, cams, etc. disposed proximate to the attachment region.

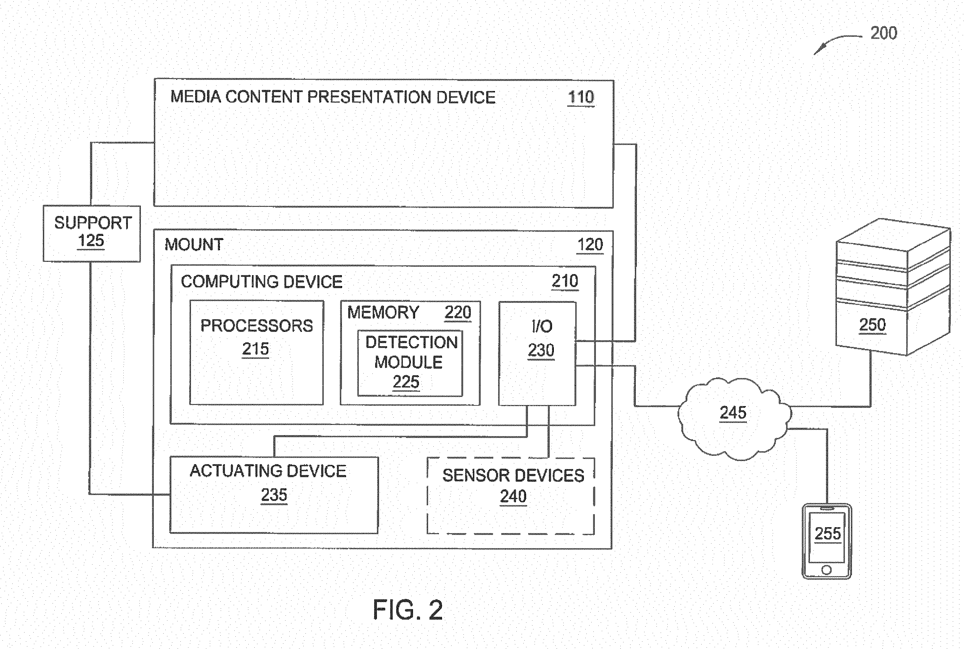

Base member 130 may be dimensioned to provide support and stability for the mount 120 and a coupled presentation device 110 during operation (*i.e.,* while manipulating the presentation device). Base member 130 may be configured to operate atop a relatively horizontal surface, using the weight of the base member to support and stably orient the coupled presentation device. In other embodiments, base member 130 may be fastened or attached to a surface, whether horizontal or not. For example, base member 130 may be attached to vertical framing (*i.e.*, a stud) within a wall. Base member 130 encloses a volume in which various devices may be disposed for providing functionality to the mount 120. Devices may include an actuating device and associated control for operating the arm 127, sensor devices, computing devices, and so forth. The devices are discussed in further detail with respect to FIG. 2.

FIGs. 1C-1F illustrate a mount for a media content presentation device, according to one embodiment. These figures depict various degrees of freedom of movement for the mount 120 (and more specifically, to the presentation device using the support member of mount 120). FIG. 1C depicts rotation of the mount 120 (and coupled presentation device 110) around an axis 140, which generally corresponds to a "pan" motion around a designated point of the mount 120 (such as a geometric center point). FIG. 1D depicts rotation of the mount 120 around an axis 150, which generally corresponds to a "tilt" motion. FIG. 1E depicts displacement of the presentation device 110 along the axis 140, which may be achieved by extending and retracting arm 127. FIG. 1F depicts rotation of the mount 120 around axis 160, which generally corresponds to a "roll" motion. While four degrees of freedom have been explicitly depicted here, the mount 120 may be configured to provide additional degrees of freedom to the presentation device, such as by using an articulating arm.

FIG. 2 is a schematic illustration of a mount for a media content presentation device, according to one embodiment. Various features described within environment 200 may generally complement the description of elements of the environment 100, such as media content presentation device 110 and mount 120.

In environment 200, media content presentation device 110 is physically coupled to mount 120 through a support 125. This simplified depiction of the physical coupling is not intended to preclude use of an arm or other components to couple the presentation device to the mount.

Mount 120 includes a computing device 210, an actuating device 235, and optionally sensor devices 240. As discussed above, these components may be located within a base member of the mount 120. Alternately, one or more components may be disposed outside the base member (such as on or within an arm or a support 125). The computing device 210 includes one or more processor(s) 215, memory 220, and input/output (I/O) 230. The computing device 210 may include any suitable computing device, such as a general purpose computer that executes software for performing the various functions described herein. Computing device 210 may also include any suitable computing module, such as firmware or an application-specific integrated circuit, that is included as part of a larger computing device or system. Computing device 210 may include combinations of any of these elements.

Computing device 210 includes one or more processors 215, which may include any processing element capable of performing the functions described herein. While depicted as a single element within computing device 210, processors 215 are intended to represent a single processor, multiple processors, a processor or processors having multiple cores, as well as combinations thereof. Memory 220 may include a variety of computer readable media selected for their size, relative performance, or other capabilities: volatile and/or non-volatile media, removable and/or non-removable media, etc. Memory 220 may include cache, random access memory (RAM), storage, etc. Memory 220 may include one or more discrete memory modules, such as dynamic RAM (DRAM) dual inline memory modules (DIMMs). Of course, various memory chips, bandwidths, and form factors may alternately be selected. Storage included as part of memory 220 may typically provide a non-volatile memory for the computing device 210, and may include one or more different storage elements such as Flash memory, a hard disk drive, a solid state drive, an optical storage device, and/or a magnetic storage device.

Memory 220 may include one or more modules for performing functions described herein. As shown, memory 220 includes a detection module 225 for determining locations of one or more individuals, and may include various additional modules such as a control module for controlling motion of the actuating device 235, and a volume control module for controlling output volume of the media content presentation device 110.

The computing device 210 may communicate with other devices, such as peripheral devices or other networked computing devices, using input/output (I/O) 230. I/O 230 may include a number of different I/O adapters or interfaces that provide various functionalities to the mount 120 using computing device 210. For example, the computing device 210 through I/O 230 may determine the location(s) of one or more objects using sensor devices 240, and may provide appropriate control signals to actuating device 235 to manipulate the media content presentation device. As discussed herein, objects may include individuals, items that are capable of being sensed by sensor devices 240, electronic devices communicatively coupled to the computing device 210, and so forth. In alternate embodiments, computing device 210 may further include input devices (such as a keyboard, mouse, touchscreen) and output devices (such as the touchscreen or a separate display) for communicating with users.

In several embodiments, computing device 210 is communicatively coupled to one or more sensor devices 240 using I/O 230. Sensor devices 240 may include one or more types of sensors for detecting objects within the sensors' respective sensing regions. The sensor devices 240 may include passive and/or active sensors. Each of the sensor devices 240 may have a unitary construction or may include multiple components, such as a transmitter located with the mount 120 and a reflector carried or worn by an individual.

For example, sensor devices 240 may include infrared (IR) sensors, thermal sensors, and/or imaging devices such as a charge-coupled device (CCD) or complementary metal-oxide-semiconductor (CMOS) sensor device. Other sensor devices may include capacitive sensors, infrared sensors, magnetic sensors, sonar sensors, radar sensors, lidar sensors, and so forth. The computing device 210 receives sensor data through I/O 230, and may perform further processing (e.g., signal conditioning or image processing) on received sensor data in order to determine the locations of objects within the sensing regions.

I/O 230 may also include network interfaces that couple the computing device 210 to one or more networked computing devices through a network 245. As shown, computing device 210 may be networked with a server 250 and a mobile computing device 255, such as a smartphone or tablet computer. Of course, other types of computing devices may also be networked with computing device 210. Network 245 may include one or more networks of various types, including a local area or local access network (LAN), a general wide area network (WAN), and/or a public network (*e.g.,* the Internet). Network 245 may operate using various wired and/or wireless networking protocols, such as Wi-Fi® (a registered trademark of the Wi-Fi Alliance), Bluetooth® (a registered trademark of the Bluetooth Special Interest Group), and so forth.

In addition to (or alternatively to) data provided to the computing device 210 from the sensor devices 240, various objects' location data may be provided by a wearable sensor device and/or by networked computing devices. For example, a user of the mount and presentation device may wear or carry a Bluetooth or Near Field Communication (NFC) tag; this tag may couple directly with the computing device 210 or with a networked computing device (such as the user's mobile computing device 255) to provide data to the computing device 210 regarding the user's location. Additionally, inertial measurement or location data from the user's mobile computing device 255 may be provided to computing device 210. The data may be provided from a separate inertial measurement unit (IMU), from individual inertial sensors (such as a gyroscope or accelerometer), from a Global Positioning System (GPS) receiver or other navigation receiver, as well as from range estimating features included in various communications protocols.

Computing device 210 is communicatively coupled to an actuating device 235 using I/O 230. The actuating device 235 is coupled to the support 125 (which may be through an arm; not shown) and controls the position and motion of the support, which in turn controls the orientation of a media content presentation device 110 coupled to (or attached to) the support. The actuating device 235 may provide motion using any known energy type - hydraulic, pneumatic, electrical, mechanical, etc.

As discussed above, the actuating device 235 may move the support 125 along one or more degrees of freedom. For example, the actuating device 235 may extend or retract an arm from the mount, and may rotate and pivot the support 125 to provide desired pan and/or tilt for the coupled media content presentation device 110. Control signals from the computing device 210 may be provided to the actuating device 235, as well as feedback data provided to the computing device 210, through I/O 230.

Computing device 210 may also communicate with the media content presentation device 110 through I/O 230. Depending on the capabilities of the particular media content presentation device 110, the computing device 210 may communicate with the presentation device over a wired or wireless connection. Accordingly, the mount 120 may include one or more ports for connecting to the presentation device, which may use standard audio, video, or data connections (e.g., High-Definition Multimedia Interface (HDMI), Digital Video Interface (DVI), Video Graphics Array (VGA), RCA, 1/8" phone, RJ45, and so forth) or proprietary connections. Computing device 210 may provide media to the presentation device 110 and/or control commands for presenting media. For example, a television may be connected to a HDMI connector on the mount 120, and the computing device 210 may receive media content from the network (e.g., streaming video/audio from a server 250) which is then sent for display on the television. The computing device 210 may also provide commands to the television over the HDMI connection (or using an alternate connection) to control the presentation of the media content. In another example, a tablet computer presents media (whether stored locally or streamed from the network 245), and the computing device 210 provides commands to control media presentation through a wireless connection with the tablet computer (say, using Bluetooth). In another embodiment, a networked computing device (such as mobile computing device 255) may provide the media content and/or control commands to the computing device 210, which are then transmitted to presentation device 110.

By providing the various means of communicatively coupling the computing device 210 with presentation device 110, a degree of flexibility may be maintained to fully use the capabilities of the presentation device while overcoming its limitations. For example, a passive audio speaker may not have a native capability for streaming media content or control of media playback. However, when coupled to the computing device 210 (through an ordinary 1/8" phone plug, for example), audio may be provided to the speaker, as well as volume and directional control of the audio playback. In another example, a wireless speaker may be equipped to receive streaming media content say, using a first type of connection (e.g., Bluetooth), but may be unable to use certain other wired or wireless communication connections. The computing device 210, however, may have those other communications capabilities, and may receive streaming media over those connections (say, using Wi-Fi or Ethernet) and provide the media to the wireless speaker over the Bluetooth connection. In another embodiment, the computing device 210 may include one or more tuner modules capable of receiving various communications signals, such as radio, television, satellite, etc. The signals may be received wirelessly or through wired connections (e.g., including a port for a coaxial cable). The tuner modules may use the signals to output media content to a coupled presentation device 110.

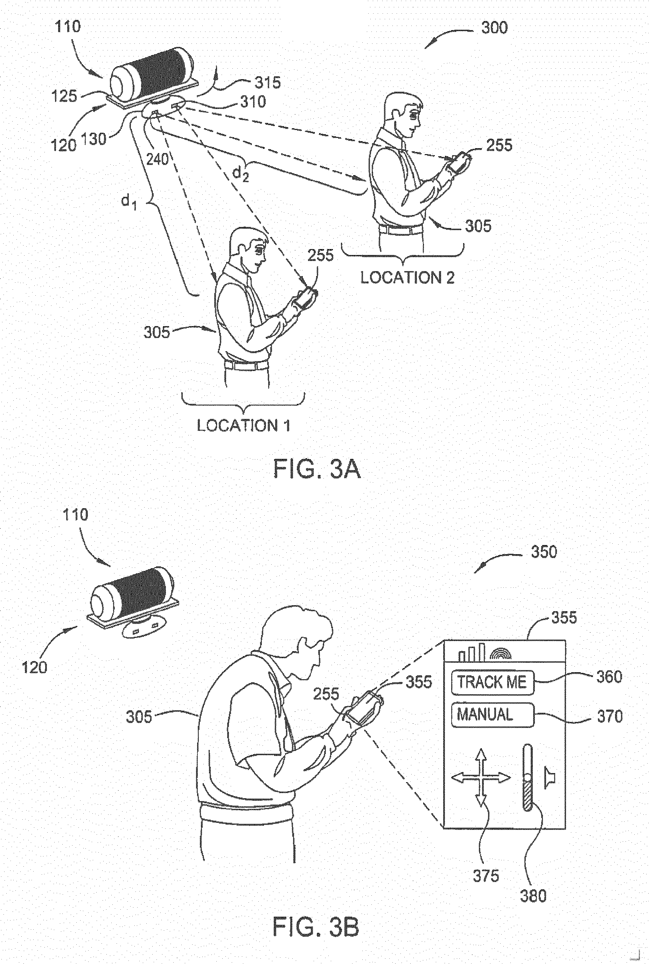

FIGs. 3A and 3B illustrate operation of a mount for a media content presentation device, according to one embodiment. Various features described within environment 300 may generally complement the description of environments 100 and 200.

Environment 300 includes a media content presentation device 110 physically coupled to a mount 120. Of course, the presentation device may be attached to the mount, consistent with descriptions provided above. Depicted as included in the base member 130 are one or more sensor devices 240 as well as a communicative coupling 310 between the computing device of mount 120 and a networked computing device. Here, the networked computing device may be a mobile computing device 255 of a user 305, such as a mobile phone or tablet computer, although other computing devices are contemplated. The mobile computing device 255 may be communicatively coupled using an I/O interface of mount 120 (*e.g.,* I/O 230 of computing device 210). The communicative coupling 310 may be direct using one or more wireless protocols, or the communicative coupling may include one or more intermediate devices, such as network routing devices.

During operation of the mount 120, the presentation device 110 may be oriented toward a user 305 at a first location ("Location 1"). The orientation may reflect the results of an initial determination of the user's location; for example, upon powering on the mount 120, the mount 120 may receive location data from the user and/or may perform a scan using sensor devices 240. Alternately, the orientation may reflect the orientation corresponding to the most recent location determination (*i.e.*, the user has not substantially changed location since the previous determination cycle). The computing device included in mount 120 may have positional data for the user using sensor devices 240 and/or data provided from user 305. The data from the user may be provided though communicative coupling 310 using a mobile computing device 255 carried by the user. Alternatively, the user may wear or carry a wearable sensor, which may be embodied as a separate sensor device or as a sensor integrated into clothing or another object carried by the user (*e.g*., handbag, backpack, wallet, etc.). The wearable sensor device may be capable of communicating directly with the computing device of mount 120, or the wearable sensor may communicate with mobile computing device 255, which then communicates with mount 120. For example, the wearable sensor may include a Bluetooth or NFC tag. The data provided by mobile computing device 255 and/or the wearable sensor may include absolute positional data, such as spatial coordinates (which may include a measure of elevation), or may include relative positional data or a relative range (e.g., in terms of distance and/or direction from the coupled computing device or from another reference point).

The determination of the user's location may be more or less continuously performed, or may occur intermittently as discrete determination events. The determination events may be performed according to timing requirements specified by the mount 120 (*e.g*., sample sensors every 20 seconds and determine user location from the sampled data) and/or responsively to receiving positional data from mobile computing device 255 and/or a wearable sensor.

During operation, as user 305 moves from the first location to a second location ("Location 2"), the user's movement may be reflected by changes in data from sensor devices 240, mobile computing device 255, and/or a wearable sensor. Accordingly, the computing device may use the updated data to determine a location of the user and control the actuating device of mount 120 to move the support 125 (*e.g.,* pan and/or tilt) and thereby track the movement of the user. By appropriately moving the support 125, a presentation device 110 coupled to the support may be re-oriented toward the user during the user's movement. By re-orienting the presentation device 110 toward the user, the media content may be delivered with greater quality to the user and may result in a more positive user experience.

In one embodiment, the computing device of mount 120 may be configured to filter changes in received data (whether sensor data or positional data) that are less than a predetermined threshold. Filtering the received data may reduce or eliminate changes in data caused by noise, or by negligible movements of the user which would result in no appreciable difference in the media content presented to the user. Some examples that might be characterized as negligible movements of the user include manipulating the mobile computing device 255 while the user remains in a relatively static position *(e.g.,* while standing or seated), the user fidgeting or moving position within a limited range, and so forth. By filtering these small changes in the data, the computing device may conserve energy by performing fewer determination processes and by transmitting fewer control signals, each of which may ordinarily cause the actuating device to move the support 125.

At the first location, the user was an estimated first distance d1 away from the mount 120 and presentation device 110. Measures of distance may be generally be included within data received by the computing device of mount 120 (whether sensor data or positional data), may be directly calculated from the received data, or may be estimated. In one embodiment, the computing device may estimate distances by performing signal processing techniques on received sensor data. For example, the user may be detected within a sensor image using object detection techniques, and the distance to the user may be estimated using the various properties of the detected user (*e.g.,* amplitude of the sensor data, detected height, width, combinations of properties, and so forth). At the second location, the user may be at a different distance d2 from the mount.

In one embodiment, the computing device may adjust the properties of the media output from the presentation device 110 based on the different distances. For example, the computing device may set the volume of audio output from the presentation device 110 to a first volume level based on distance d1, and may set a second volume level based on distance d2. To set volume levels, the computing device may include audio amplifier circuitry and may adjust output levels (whether analog or digital) of the circuitry. Additionally or alternatively, the computing device may transmit control commands to the presentation device 110, causing the volume level of the presentation device to be set or altered. Of course, other media output properties may also be adjusted based on determined distances, such as display intensity, color, resolution, quality (*e.g*., sampling frequency), adjusting the timing of audio and video signals to maintain synchronization for the user at the current location, altering audio equalization settings, and so forth.

Returning to the audio volume example, the volume level may be increased as the determined distance of the user 305 from the mount 120 and presentation device 110 increases, and decreased as distance decreases. In one embodiment, the computing device may include a cap or maximum limit for the audio volume levels, so that even if the user 305 exceeds the corresponding distance from the mount 120, the volume level of the audio would not continue to increase to what may be unpleasant volumes for others. Limiting the volume levels may avoid possible degradation of the audio due to saturation, may limit stresses on the audio device, and may provide a more positive experience for the user and others (*e.g.,* others in the same room or nearby rooms to user 305, neighbors, etc.).

In some embodiments, the computing device may include additional logic for controlling playback of media from the presentation device 110. In one of these embodiments, and upon determining the user 305 is out of range of the device, the computing device may pause or stop playback, and may resume play when the user 305 returns within the range. For example, being "out of range" may include the user 305 exceeding the distance from the mount 120 corresponding to the maximum volume, exceeding another predetermined distance from the mount 120, or the computing device determining that the path from the presentation device 110 to the user 305 is obstructed. The obstruction may be a wall (*e.g.,* when the user enters another room), or a person or object disposed between the presentation device 110 and user 305 and blocking the path for media presentation. The computing device may determine the presence of an obstruction using one or a sequence of sensor images. In another embodiment, the computing device may pause, stop, or otherwise control playback when the user location cannot be determined. The computing device in this case may employ a combination of sensor data and positional data, comparing various data directly or using non-weighted or weighted averages to reach the indeterminate state.

In one embodiment, the computing device of mount 120 may be configured to detect one or more individuals (not shown) in addition to a user 305. The computing device of mount 120 may detect the one or more individuals, for example, using object detection techniques for sensor images provided by sensor devices 240. The individuals may or may not also have computing devices or wearable sensors that communicatively couple to the computing device of mount 120, as described above.

When multiple individuals are detected (which may include a user 305), the control provided by the mount 120 to orient the presentation device may differ from the control provided when only a single user is detected. In one embodiment, the mount 120 may move the support 125 based on two or more determined locations of individuals. For example, the mount 120 may move the support to orient the presentation device to the nearest individual (*i.e.*, corresponding to a shortest determined distance), the farthest individual (*i.e.*, corresponding to a longest determined distance), or to another point based on the determined locations, such as a geometric center of the determined locations. In one embodiment, the mount 120 may move the support based on the distribution density of the detected individuals. For example, mount 120 may detect a number of individuals, of which a group is positioned relatively close to each other. Mount 120 may orient the presentation device toward the group, even though other detected individuals may be closer to (or further from, etc.) the mount 120. Of course, mount 120 may orient the presentation device using combinations of any of these features, such as by determining a weighted geometric center.

Likewise, the mount 120 may control the properties of the media output from the presentation device 110 based on the determined locations. For example, an audio volume level of the presentation device may be set to a level corresponding to the distance of the farthest individual from the mount 120, as might be set in embodiments where a single user is located at that distance. Other examples include setting the volume level to correspond to the nearest individual, or to another selected point, such as a geometric center. Mount 120 may also control volume levels based on distribution density.

FIG. 3B depicts user 305 manipulating a computing device 255, such as a mobile phone. Other types of computing devices may be alternately used to provide various inputs for controlling the mount 120 and/or presentation device 110, consistent with the description provided above. Also depicted is a simplified example of a graphical user interface (GUI) 355 displayed on a display screen of the computing device 255. The GUI 355 may generally be provided as a web-based interface or as a discrete application executing on the computing device 255. As shown, the GUI 355 includes separate input regions that a user may touch to select the operating mode of the mount, such as a tracking mode 360 ("Track me") and a manual mode 370 ("Manual"). Of course, other types and arrangements of interfaces, which may have varying levels of complexity, may alternately be used to provide the controls to mount 120 described herein. While not shown, the GUI 355 may also include a selection input, through which a user may identify which presentation device 110 is physically coupled to the mount 120. The computing device 255 or the computing device of the mount 120 may store profiles for preregistered presentation devices, which contain various configuration settings associated with each presentation device. The GUI 355 may also include the capability of creating new profiles and registering new presentation devices.

While operating in the manual mode 370, additional input regions may be provided or activated to allow a user of GUI 355 to manually adjust the orientation and/or volume of the presentation device 110. Though not explicitly depicted, other control functions, including those related to media selection and playback, may also be included in or integrated with the GUI. As shown, direction input region 375 may be displayed as a directional pad, and volume input region 380 may be displayed as a slide. In one embodiment, the left and right oriented portions of the direction input region may control the pan of the mount 120, and the up and down oriented portions may control the tilt of the mount 120. User input in the direction input region 375 may cause appropriate control signals to be sent to the actuator device of mount 120 to manipulate the support and an attached presentation device 110. Likewise, user input in the volume input region 380 may cause appropriate control signals to modify the volume at the presentation device 110 (*i.e.,* using volume control functions included in the presentation device) or at mount 120 (e.g., adjusting circuitry gain). Of course, various other methods of input using a GUI (text, knobs, radio buttons, etc.) that are known in the art may provide the disclosed controls, as well as alternative user interfaces and input devices.

In the tracking mode 360, the computing device of mount 120 may provide the control signals to actuate the support to orient presentation device 110 to follow the user's location, consistent with the embodiments described above. While operating in tracking mode 360, other input regions of the GUI 355 may be disabled. For example, the direction input region 375 and volume input region 380 may not be displayed, or may be grayed out, or otherwise indicated as disabled.

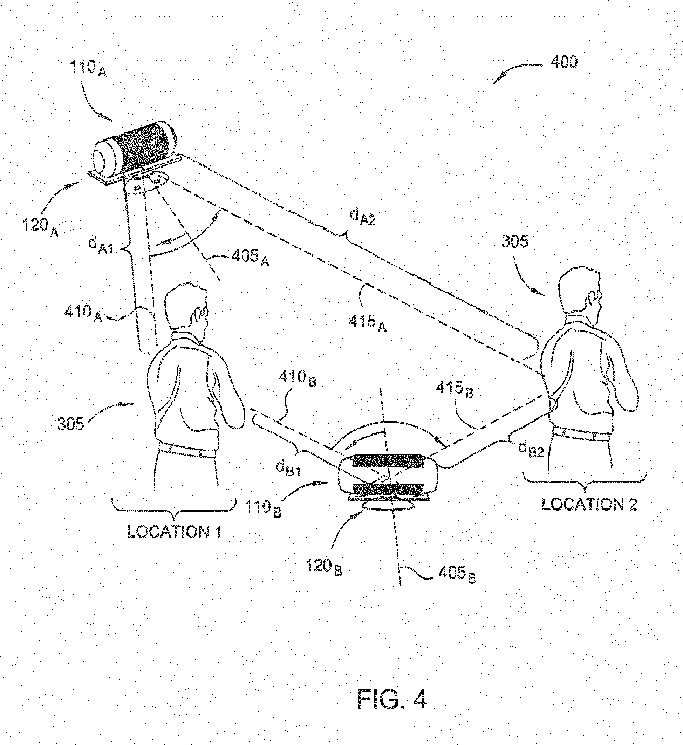

FIG. 4 illustrates operation of a plurality of mounts for corresponding media content presentation devices, according to one embodiment.

As shown in environment 400, two media content presentation devices 110_{A}, 110_{B} (collectively, presentation devices 110) are respectively coupled to mounts 120_{A}, 120_{B} (collectively, mounts 120). Of course, any number of presentation devices, which may be of varying types, and mounts may be used consistent with the description provided herein.

During operation of the mounts 120_{A}, 120_{B}, the corresponding presentation devices 110_{A}, 110_{B} may be oriented toward a user 305 at a first location ("Location 1"). At location 1, the user 305 is located at a first distance d_{A1} and relative orientation 410_{A} from mount 120_{A}, and is located at a first distance d_{B1} and relative orientation 410_{B} from mount 120_{B}.

The mounts may undergo an initialization process, in which the user's location is initially determined using location data and/or sensor devices included in the mounts. The mounts may individually perform the initial determination of the user location, or may undergo a process to determine the location (and possibly an orientation) of the other mounts. If the relative locations of the mounts in environment 400 are known, a single mount may be used to determine the user's location, and may then communicate the determined user location directly to the other mounts. Alternatively, the single mount may communicate to each of the other mounts a respective (translated) relative user location, so that the other mounts need not perform further processing on the user location data before orienting toward the user location.

The mounts may user sensor devices to locate one or more individuals, which may include the user 305. One or both of the mounts may receive location data directly from the user, such as from a mobile computing device or wearable sensor. In one embodiment, location data is received by one of the mounts, which may then wirelessly communicate the location data to the other mounts as described above.

During operation, for example, using the tracking mode 360, as user 305 moves from the first location to a second location ("Location 2"), the mounts may each track the movement of the user, actuating the respective supports and orienting the respective presentation devices 110 toward the user. At location 2, the user 305 is located at a second distance d_{A2} and relative orientation 415_{A} from mount 120_{A}, and is located at a second distance d_{B2} and relative orientation 415_{B} from mount 120_{B}.

The mounts 120_{A}, 120_{B} may each also generate appropriate control signals to modify media output properties. For example, the mounts 120 may control the volume of the respective presentation devices 110, whether at the presentation device 110 or at mount 120. Of course, other properties may be modified, such as delay of the audio delivered from one mount to maintain synchronization with the other mount over the differing distances. In one embodiment, the mounts 120 may each include a cap or maximum limit for the audio volume levels. For example, at location 2, the user 305 at second distance d_{A2} may be outside a maximum distance corresponding to the maximum audio volume level for mount 120_{A}, but at second distance d_{B2} may still be within the maximum distance for mount 120_{B}. In one embodiment, mount 120_{A} may play back media content at the maximum audio volume level while the user is located beyond the maximum distance for the mount (such as at location 2), while mount 120_{B} plays back media content at a volume corresponding to distance d_{B2}. In an alternate embodiment, mount 120_{B} may increase its volume level to partially or fully offset the audio volume that is lost to user 305 due to the user distance exceeding the maximum distance for the other mount 120_{A}.

The mounts 120 may include additional logic for collectively controlling playback of media from presentation devices 110, in addition to the logic described above with respect to individual presentation devices. For example, one or more of the mounts 120 may be considered "out of range" due to a detected obstruction. The obstructed mount(s) may communicate the "out of range" status to other non-obstructed mount(s) using wireless communication (preferably not using a line-of-sight based protocol, to ensure the obstruction is avoided), and the obstructed mount(s) may also pause media playback. One or more of the non-obstructed mounts may also increase their volume levels to partially or fully offset the audio volume that is lost to user 305 (and/or to other detected individuals) due to the obstruction.

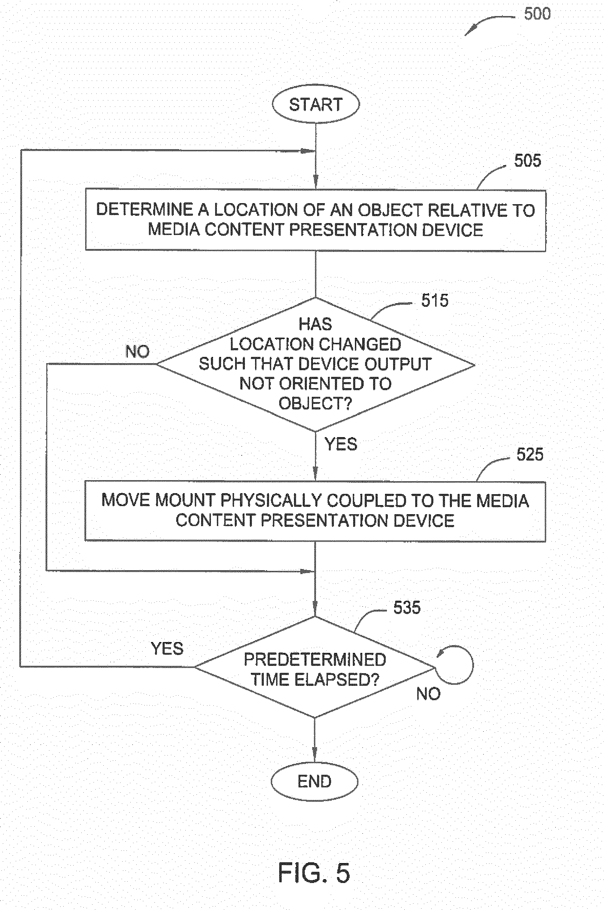

FIG. 5 illustrates a method for presenting media content using a presentation device, according to one embodiment. The method 500 generally may be used consistent with descriptions of the mounts and presentation devices, and within the environments described in various embodiments.

The method 500 begins at block 505, where a location of an object relative to a media content presentation device is determined. The determination may be made by a computing device included in a mount for the presentation device using sensor data and/or user location data communicated to the computing device using a separate computing device or wearable sensor.

At block 515, the method determines whether the location of the object has changed such that media output provided by the presentation device is not oriented to the object. This determination may be performed by a computing device included in the mount, and may act as a threshold function to eliminate unnecessarily fine movements of the mount's support (along with the coupled presentation device). The data received by the computing device (which generally suggests movement by the object) may reflect sensor or other noise, or perhaps negligible movements of the object which would result in no appreciable difference in the media content presented to the person. If the determination indicates the object's location has changed greater than some threshold amount, the method proceeds to block 525; otherwise, the method proceeds to block 535.

Block 515 may be performed optionally, as the method may alternatively proceed directly from block 505 to block 525 to reorient the presentation device. In one embodiment, block 515 may be included (or excluded) from method 500 along with optional block 535.

At block 525, the mount is moved based on the determined position of the object. This may include orients media content that is output from the presentation device toward the object. A computing device included in the mount may provide control signals to an actuating device also included in the mount. The actuating device may support movement along several degrees of freedom for a support member of the mount, which physically interfaces with the presentation device. By providing the movement to the support, the actuating device may orient or re-orient the physically coupled presentation device to output media content in any desired orientation.

At block 535, it is determined whether a predetermined amount of time has elapsed. The computing device included in the mount may perform this block, which may act as a time threshold, allowing intervals to be set between subsequent determination cycles. In this manner, the computing device may perform a reduced number of (discrete) cycles at desired intervals, instead of more-or-less continuous sampling, determination, and actuation. Block 535 is optional, as method 500 may be used to perform a one-time determination and possible re-orientation, or may be performed as a continuous loop or a regularly sampled loop. If the predetermined time has not elapsed to perform the next determination, the method waits at block 535. When the predetermined time has elapsed, the method returns to block 505. Method 500 may be terminated at any point during the method, but may generally terminate following completion of a determination cycle.

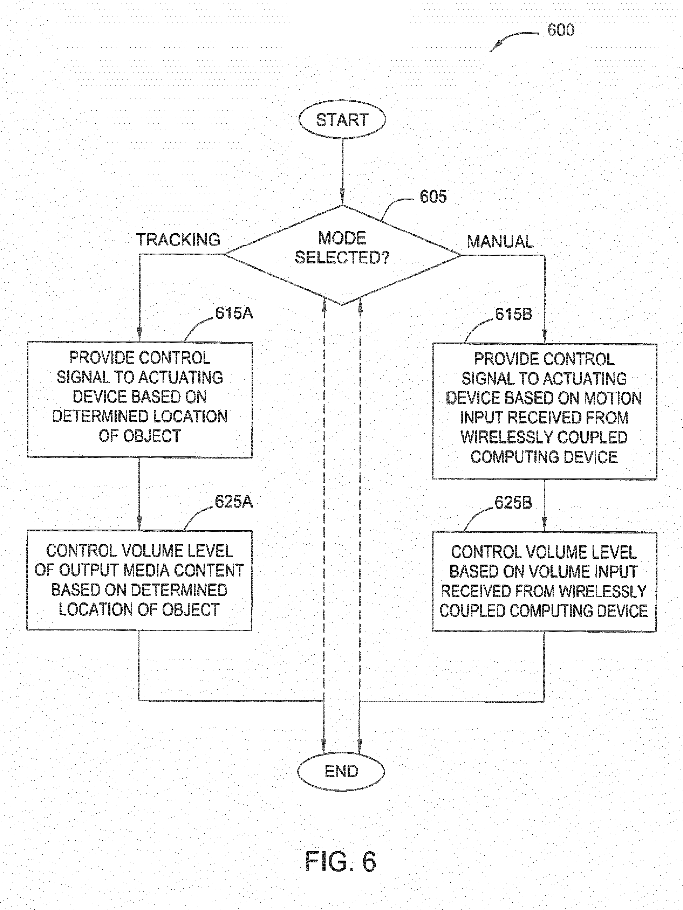

FIG. 6 illustrates a method for controlling presentation of media content using a presentation device, according to one embodiment. The method 600 generally may be used consistent with descriptions of the mounts and presentation devices, and within the environments described in various embodiments. Method 600 may be used performed by a computing device to control the mount and/or an attached presentation device. For example, method 600 may be performed by an application executing on a mobile computing device communicatively coupled to the mount.

Method 600 begins at block 605, where a mode of operation is determined for the control of the mount. The mode may be selected, e.g., through a user interface of the controlling computing device. Method 600 includes branches that represent a "tracking" mode and a "manual" mode.

In tracking block 615A, appropriate control signals are provided to an actuating device of the mount based on a determined location of the object. For example, the object's location may have been determined using block 505 of method 500. The control signals may be generated by a computing device within the mount, and may specify a desired movement of the actuating device along one or more degrees of movement. Block 615A may generally be included within block 525 of method 500.

In tracking block 625A, appropriate control signals are provided to control the volume level of output media content based on the determined location of the object. The control signals may be provided to the presentation device directly, or to the mount (say, if the mount is providing streaming media to the presentation device using wired audio and/or video connections). Of course, other properties of the media output may be controlled similarly.

In manual block 615B, control signals are provided to an actuating device responsive to receiving motion input from a wirelessly coupled computing device, such as a mobile computing device. The control signals may be provided through a user interface of the controlling computing device, such as a GUI. The motion input may be provided as directional input *(e.g.,* left, right, up, and down), which may be translated to provide suitable control signals according to the degrees of movement of the actuating device (such as pan and tilt).

In manual block 625B, control signals are provided to control the volume level of output media content response to volume input received from a wirelessly coupled computing device.

Regardless of which branch is active in method 600, the blocks 615 and 625 may generally be performed in any order, and may be entirely separate in time or at least partially overlapping. Method 600 may end following completion of one of the branches, such as by completing block 625A or 625B. The method 600 may be performed more or less continuously by the computing device or at discrete intervals, so that following completion of block 625A/B, the method returns to block 605.

The present disclosure may be embodied as an apparatus, a system, a method, and/or a computer program product. The computer program product may include a computer readable storage medium (or media) having computer readable program instructions thereon for causing a processor to carry out aspects of the present disclosure.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present disclosure may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

While the foregoing is directed to embodiments of the present disclosure, other and further embodiments of the disclosure may be devised without departing from the basic scope thereof, and the scope thereof is determined by the claims that follow.

## Claims

1. A mount for a media content presentation device, the mount comprising:
a base member;
a support member coupled to the base member and adapted to physically couple to the media content presentation device;
a first computing device disposed within the base member and comprising a detection module that operates to determine a location of an object relative to the mount; and
an actuating device communicatively coupled to the first computing device and that operates to move the support based on the determined location.

2. The mount of claim 1, further comprising one or more sensor devices disposed within the base member and communicatively coupled to the computing device, wherein the detection module determines the location of the object based on data received from the one or more sensor devices.

3. The mount of claim 1, wherein the first computing device is configured to wirelessly receive positional data corresponding to the object and media content from one or more second computing devices.

4. The mount of claim 3, wherein the object includes at least one of the second computing devices, the first computing device receiving positional data from the at least one second computing device, and wherein the positional data includes one or more of range estimation data to the first computing device and inertial measurement data from one or more sensors of the at least one second computing device.

5. The mount of claim 3, wherein the first computing device receives media content from at least one of the second computing devices and outputs the media content to the media content presentation device via a different connection.

6. The mount of claim 5, wherein the media content presentation device is a passive audio speaker, and the media content is output via a wired connection between the passive audio speaker and the first computing device.

7. The mount of claim 1, wherein the first computing device further operates to control a volume level of the media content presentation device based on the determined location of the object.

8. The mount of claim 7, wherein the first computing device:
in a first, tracking mode of operation, is configured to provide a control signal to the actuating device based on the determined location of the object, and is further configured to control the volume level of the media content presentation device based on the determined location of the object; and
in a second, manual mode of operation, is configured to provide the control signal to the actuating device based on motion input received wirelessly from a second, mobile computing device, and is further configured to control the volume level based on volume input received wirelessly from the second computing device,
wherein the first and second modes of operation are selectable by a user of the second computing device, and the motion input and volume input are provided by the user via a graphical user interface of the second computing device.

9. A system, comprising:
one or more mounts, each mount comprising:
a base member;
a support member coupled to the base member and adapted to physically
couple to a respective media content presentation device;
a respective first computing device disposed within the base member and
comprising a detection module that operates to determine a location of an object relative to the mount; and
a respective actuating device communicatively coupled to the computing
device and that operates to move the support based on the determined location; and
a locator device communicatively coupled to at least one first computing device, wherein the detection module is configured to receive location data from the locator device to determine the location of the object.

10. The system of claim 9, wherein the one or more first computing devices are configured to wirelessly receive location data and media content from one or more second computing devices.

11. The system of claim 10, wherein the locator device is included in the second computing device, and wherein the location data includes one or more of range estimation data to the first computing device and inertial measurement data from one or more sensors of the at least one second computing device.

12. The system of claim 9, wherein the locator device includes one or more sensor devices disposed within at least one of the one or more mounts that are configured to provide the location data to the corresponding first computing device.

13. The system of claim 9, comprising a plurality of mounts, wherein each of the plurality of mounts are configured to move the corresponding support member differently, based on the determined location of the object.

14. The system of claim 9, wherein each first computing device further operates to control a volume level of the respective media content presentation device based on the determined location of the object.

15. The system of claim 14, wherein the first computing devices:
in a first, tracking mode of operation, are configured to provide a control signal to the respective actuating device based on the determined location of the object, and are further configured to control the respective volume level of the media content presentation device based on the determined location of the object; and
in a second, manual mode of operation, are configured to provide the control signal to the respective actuating device based on motion input received wirelessly from a second, mobile computing device, and are further configured to control the respective volume level based on volume input received wirelessly from the second computing device,
wherein the first and second modes of operation are selectable by a user of the second computing device, and the motion input and volume input are provided by the user via a graphical user interface of the second computing device.
